# EUROPEAN PATENT SPECIFICATION

(11) **EP 3 696 207 B1**
(45) Date of publication and mention of the grant of the patent: **23.06.2021**
(21) Application number: 19157549.7
(22) Date of filing: 15.02.2019
(51) Int. Cl.: C08G 18/48, C08G 18/66, C08G 18/76, C08G 18/79, C08G 18/80, C08G 18/12, C08G 18/18, C08G 18/20, C08G 18/24, C08G 18/32, C08G 18/38, C09J 175/08, C08G 18/30

(54) **PROCESS FOR MOUNTING A WINDOW PANE IN A FRAMING STRUCTURE**
VERFAHREN ZUM MONTIEREN EINER FENSTERSCHEIBE IN EINER RAHMENSTRUKTUR
PROCÉDÉ DE MONTAGE D'UNE VITRE DE FENÊTRE DANS UNE STRUCTURE D'ENCADREMENT

(43) Date of publication of application: 19.08.2020
(73) Proprietor: EFTEC AG, 8590 Romanshorn (CH)
(72) Inventor: Kresser, Klaus, 8590 Romanshorn (CH)
(74) Representative: Hepp Wenger Ryffel AG

(56) References cited:
- US-A- 5 603 798
- US-A1- 2014 290 855
- US-A1- 2015 291 863
- US-A1- 2017 174 959

## Description

The present invention relates to a process for mounting a window pane in a frame structure of a vehicle.

Recently, the installation of windows in vehicles, in particular large vehicles, such as buses or trains, has been a major challenge. On one hand, huge glass panes are installed which have to withstand high wind loads due to high travel speeds. On the other hand, manufacturers demand short assembly times in order to guarantee a fast and cost-effective manufacturing process. For these reasons, adhesives such as polyurethanes are particularly suitable as joining technologies.

In the prior art, the inexpensive one-component polyurethane adhesives are usually used. Apart from a favourable price, one-component polyurethanes are beneficial for their ease of application. However, there is a downside because of their slow curing speed and the formation of CO₂ bubbles during the curing process, which in turn may lead to adhesive defects and ultimately to the loss of adhesion. The formation of CO₂ bubbles is even worse in accelerated one-component polyurethane systems, wherein the reaction is accelerated by a water-containing system.

In contrary, two-component polyurethane systems are comparatively fast and show no bubble formation. The disadvantage of said systems is the need to maintain an exact mixing ratio, which is only technically possible with relatively complicated and expensive mixers. This makes assembling more difficult for fitters.

It is therefore an object of the present invention to overcome the disadvantages of the prior art in providing a process for mounting a window pane in a framing structure using an adhesive system, which is reasonably inexpensive and reliable.

This purpose is achieved by the independent claims.

A process for mounting a window pane into a framing structure, especially a framing structure in a vehicle, comprises five steps, as follows:
In step i), an adhesive system is provided comprising a polyurethane prepolymer-containing component A and an amine- or polyol-containing component B, preferably a polyol-containing component B. The adhesive system comprising component A and component B, is applied in step ii) to the at least one window pane or the framing structure. In step iii), the at least one window pane and the framing structure are joined to each other. Then the applied adhesive system comprising component A and component B is at least partially cured in step iv). In step v), the gap between the at least partially cured adhesive system and the frame structure and/or between the at least partially cured adhesive system and a neighbouring, second window pane is filled with component A.

The invention provides several advantages over the prior art. One advantage of the two-component adhesive used in step ii) is that it does not form CO₂ bubbles. The window pane can therefore be installed without any defective adhesive spots and is therefore very stable and resistant. Another advantage of two-component adhesives is that faster curing can be achieved than with a one-component polyurethane adhesive. The advantage of the one-component polyurethane adhesive used in step v) is its simple and pleasant handling for the fitter. Importantly, the fitter needs not to switch adhesives. Rather, he can just continue to use component A and only block supply of component B. In addition, the one-component adhesive system is cost-effective.

The isocyanate-terminated prepolymer or prepolymer mixture in component A is a polyurethane or polyurea prepolymer, where appropriate as a blend with further isocyanates, examples being monomeric diisocyanates, polymeric isocyanates, or monofunctional isocyanates. Where appropriate it is also possible not to use prepolymers at all, but rather, the corresponding reactants (diisocyanates/polyisocyanates on the one hand and diols/polyols and/or diamines/polyamines on the other) for the generation of a prepolymer can be present in component A. Polyurethane prepolymers and/or polyurethanes prepolymer blends are preferred for quality assurance purposes. They allow the necessary adhesion for the bonding of window panes into a frame structure. Suitable polyurethane or polyurea prepolymers and their preparation are known to the skilled person.

Polyisocyanates are essential for the preparation of polyurethanes and polyureas. The general empirical formula of polyisocyanates is R-(NCO)ₙ, with n ≥ 2, and with R denoting an aromatic or aliphatic group. Polyisocyanates that react with hydroxyl groups form polyurethanes; polyisocyanates that react with amine groups form polyureas. Polyisocyanates used are preferably diisocyanates, with particular preference selected from the group consisting of 4,4'-methylenebis(phenyl isocyanate) (MDI); tolylene diisocyanate (TDI); m-xylylene diisocyanate (XDI); hexamethylene diisocyanate (HDI); methylenebis(4-cyclohexyl diisocyanate) (HDMI); naphthalene 1,5-diisocyanate (NDI); 3,3'-dimethyl-4,4'-biphenyl diisocyanate (TODI); 1,4-diisocyanatobenzene (PPDI), phenyl 1,4-diisocyanate; trimethylhexamethylene diisocyanate (TMDI); isophorone diisocyanate(IPDI); 1,4-cyclohexyl diisocyanate (CHDI); diphenyl ether 4,4'-diisocyanate; p,p'-diphenyl diisocyanate; lysine diisocyanate (LDI); 1, 3-bis (isocyanatomethyl) cyclohexane; polymethylpolyphenyl isocyanate (PMDI); and isomers and/or mixtures thereof.

The isocyanates can of course be used in the form of higher homologues, such as in isocyanurate, carbodiimide, allophanate, bi-uret or uretdione form, for example.

Polyurethane prepolymers are prepared by reacting polyols with the abovementioned isocyanates. Suitable polyols are familiar to the skilled person. In the context of the invention they typically have a molecular weight of about 500 to about 6000 and/or two to four hydroxyl groups. Particularly preferred polyols are polyesters, polyethers, polythioethers, polyacetals and polycarbonates having in each case two to four hydroxyl groups. Preferred polyethers in the context of the invention are known to the skilled person and can be prepared, for example, by polymerizing epoxides such as ethylene oxide, propylene oxide, butylene oxide, tetrahydrofuran, styrene oxide or epichlorohydrin in the presence of BF₃, or by addition of epoxides, more particularly of ethylene oxide or propylene oxide, to molecules containing reactive hydrogens, such as water, alcohol or amines, for example (examples being low molecular weight diols, triols or tetraols; 4,4'-dihydroxydiphenylpropane; aniline; ammonia; ethanolamine; ethylenediamine).

Polyalkenylpolyols, polyetherpolyols or polyesterpolyols or mixed polyesterpolyetherpolyols having preferably 2 or 3 hydroxyl end groups can be reacted with a well-defined excess of isocyanates to give NCO-terminated urethane prepolymers. They are also available commercially, for example from BAYER AG, e.g. under the commercial brand names Desmodur® E22 or E23. Distilled products, where the removal of the excess diisocyanate leads to a functionality = 2, are likewise known and can be used. Polyurea prepolymers are prepared in conventional manner reacting polyamines having ≥ 2 amine groups with a well-defined excess of difunctional or polyfunctional isocyanate compounds to give NCO-terminated urea prepolymers. In the context of the invention, however, polyurea prepolymers are less preferred than polyurethane prepolymers, since they tend to gel at room temperature as a result of the formation of hydrogen bonds.

In preferred embodiments the catalyst used in component B is selective towards polyol-isocyanate reactions, preferably the catalyst in component B is a tertiary amine.

It is advantageous to use tertiary amines as catalysts. They are catalytically very effective and in contrast to metal catalysts, cheaper and usually less toxic.

Tertiary amine catalysts can contain an isocyanate-reactive group or not. Isocyanate reactive groups comprise primary amine, secondary amine, hydroxyl group, amide or urea. Exemplary catalysts containing isocyanate reactive groups are N,N-bis(3-dimethylamino-propyl) N-isopropanolamine; N,N-dimethylaminoethyl-N'-methyl ethanolamine (DABCO® T, Air Products and Chemicals, Inc.); N,N,N'-trimethylaminopropyl-ethanolamine (POLYCAT® 17, by Air Products and Chemicals, Inc.), N,N-dimethylethanolamine (DABCO® DMEA); N,N-dimethyl-N',N'-2-hydroxy(propyl)-1,3-propylenediamine; dimethylaminopropylamine (DMAPA); (N,N-dimethylaminoethoxy)ethanol, methyl-hydroxyethyl-piperazine, bis(N,N-dimethyl-3-aminopropyl)amine (POLYCAT® 15), N,N-dimethylaminopropyl urea (DABCO® NE1060, DABCO® NE1070), N,N'-bis(3-dimethylaminopropyl) urea (DABCO® NE1060, DABCO® NE1070), bis(dimethylamino)-2-propanol, N-(3-aminopropyl)imidazole, N-(2-hydroxypropyl)imidazole, and N-(2-hydroxyethyl) imidazole.

The catalyst may also comprise tertiary amines that are highly volatile and not isocyanate-reactive. Suitable catalysts may include, for example, diazabicyclooctane (triethylenediamine), supplied commercially as DABCO 33-LV® catalyst, tris(dimethyalminopropyl) amine (Polycat® 9), dimethylaminocyclohexylamine (Polycat® 8) and bis(dimethylaminopropyl)-N-methylamine (Polycat® 77).

In preferred embodiments the ratio of component A to component B is 10 to 0.5, preferably 10 to 1.2.

It is advantageous that there is a large difference between component A and component B in the mixing ratio. As a result, the pressure drop in the application device is low if the B component is switched off in step v).

In preferred embodiments the mixing of component A and component B occurs by static or dynamic mixing.

This is advantageous because it gives the process a high degree of flexibility, which is necessary because the purchase of a dynamic mixing system is very expensive and the user has already chosen a system on site.

In preferred embodiments the polyol is short chained and has a functionality of 2-4 with a molecular weight of 60-120 g/mol, preferably a functionality of 3 and a molecular weight in the range of 80-100, preferred 90-100, more preferred of 92 g/mol. These short chained polyols are advantageous because of their short reaction time with isocyanate groups, resulting in fast curing.

Suitable polyols are well known to the skilled person. In the context of the invention they typically have a molecular weight of about 60 to about 120 and/or two to four hydroxyl groups. Particularly preferred polyols are polyesters, polyethers, polythioethers, polyacetals and polycarbonates having in each case two to four hydroxyl groups. Preferred polyethers in the context of the invention are known to the skilled person and can be prepared, for example, by polymerizing epoxides such as ethylene oxide, propylene oxide, butylene oxide, tetrahydrofuran, styrene oxide or epichlorohydrin in the presence of BF₃, or by addition of epoxides, more particularly of ethylene oxide or propylene oxide, to molecules containing reactive hydrogens, such as water, alcohol or amines, for example (examples being low molecular weight diols, triols or tetraols; 4,4'-dihydroxydiphenylpropane; aniline; ammonia; ethanolamine; ethylenediamine).

In preferred embodiments component A comprises (in weight-%) 40-60% polyurethane prepolymer; 15-25% plasticizer; 0.1-1% amine catalyst and 20-40% filler particles.

The advantage of this specific composition for component A is an optimized thixotropy for the mixing ratio in step ii) and good non-sag properties in step v). An optimized thixotropy of the two components of a two-component polyurethane system is relevant to ensure an optimal mixing ratio in the mixing device und thus optimized curing conditions. If the mixing ration is not constant, partial to no curing occurs. However, if component A is used in step v) as a one-component polyurethane system, good non-sag properties are required to prevent the flow of uncured adhesive.

In preferred embodiments component B comprises (in weight-%) 35-55% polyol, preferably polyols with an average OH-functionality of 3, most preferably glycerin; 0.1-1% catalyst; 40-60% thickening agent, preferably hydrophobic thickening agent; and other additives, such as plasticizers.

The advantage of this specific composition for component B guarantees the optimized thixotropy for the mixing ratio in step ii) and therefore a constant and complete curing of the mixture of component A and B. In addition, the functionality of the polyol ≥ 3 ensures the large difference in the mixing ratio between component A and component B. This means that only a small amount of B component is required for the curing process and, as mentioned earlier, only a minimal pressure drop occurs when switching the application device from step iv) to step v).

The components of the invention can of course comprise further additives as are generally used in the polyurethane/polyurea industry. For example: plasticizers. Examples being esters of organic carboxylic acids or their anhydrides; phthalates such as dioctyl phthalate or diisodecyl phthalate, for example, adipates, such as dioctyl adipate, for example, sebacates, organic phosphoric and sulphonic esters, polybutenes and other compounds that do not react with isocyanates; organic and inorganic fillers, such as, for example, ground or precipitated calcium carbonates, which if appropriate have been coated with stearates, or carbon black, kaolin, alumina, silica and PVC powders; rheology modifiers such as, for example, thickeners, examples being urea compounds, polyamide waxes, bentonites or fumed silica; and also other substances commonly employed in the polyurethane industry. With regard to such additives reference is made to Polyurethane Handbook 2nd edition, Gunter Oertel (Editor), Hanser Publishers Munich 1994, pages 98 to 128, with regard to additives common in the art.

Preferably component A may be used in step v) together with an accelerator, preferably a water based accelerator comprising water and thickening agents. Further preferably, used thickening agents are polar and able to bind water by hydrogen bridges.

The advantage of a water based accelerator is a shorter curing time of the one-component polyurethane system of step v).

The invention further relates to the use of a reactive system, comprising a component A and a component B, wherein component A comprises a polyurethane prepolymer, and component B comprises an amine or a polyol, preferably a polyol, for a process for mounting a window pane in a frame structure of a vehicle.

The advantage of using this invention is the avoidance of bubble formation in the curing process by using a two-component polyurethane adhesive in step ii). Additionally, in step v) of the process the application of the one-component polyurethane adhesive is simple and cost-effective.

Furthermore, the invention relates to a vehicle comprising at least one window pane joined to a framing structure by the process described above.

A vehicle, with window panes that have been inserted into a frame construction according to the process of the present invention has several advantages. On one hand the pane construction can withstand the high forces of the airstream. On the other hand, the manufacturing process of such a vehicle is simple and cost efficient.

In the following the invention is exemplified in more detail using a working example, without restricting the object of the invention to this embodiment.

The compositions of components A and B are shown in the following. The values are given in weight-%:

### A-Component

| | | |
|---|---|---|
| prepolymer formed by the reaction of a mixture polyetherdiol and poleythertriol, 4,4'-methylendiphenyldiisocyanate and the reaction product of hexamethylendiisocyanate, oligomer and mercaptopropyltrimethoxysilane | PU prepolymer | 52.0 |
| dibutyltin dilaurate | tin catalyst | 0.01 |
| diisodecylphthalate | plasticizer | 17.8 |
| 2,2'-dimorpholinyldiethylether | tertiary amine | 0.1 |
| calcium carbonate, carbon black | filler | 30.0 |

### B-Component

| | | |
|---|---|---|
| trifunctional polypropylene ether polyol | polyether polyol | 47.1 |
| monoethylenglycol | chain extender | 3.7 |
| amine caltalyst diluted in monoethylene glycol | tertiary amine | 0.5 |
| calcium carbonate | filler | 48.7 |

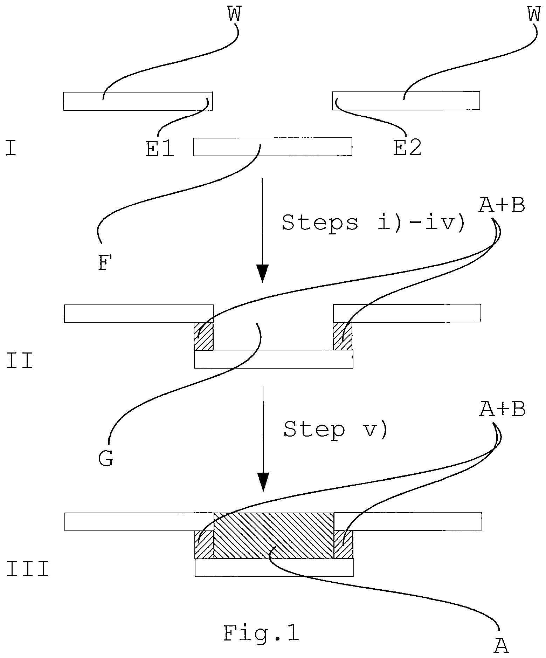

The process steps of the invention are explained in figure 1.
- Figure 1:: Process for mounting a window pane in a framing structure.

A process shown in figure 1, is used for mounting a window pane W in a framing structure F.

In step ii), a two-component polyurethane system, comprising component A and component B, is mixed and applied on edge E1 of the framing structure F. The window pane W is positioned on the two-component bead A+B. Steps ii) to iv) are repeated with a further window pane W on the opposite edge E2 of the framing structure F.

After the two-component system A+B is cured, in step v), a gap G is filled with a one-component polyurethane system A.

## Claims

1. Process for mounting a window pane into a framing structure, especially a framing structure in a vehicle, comprising the steps of
i) providing an adhesive system comprising a component A and a component B, wherein
▪ component A comprises a polyurethane pre-polymer, and
▪ component B comprises an amine or a polyol, preferably a polyol;
ii) applying an adhesive system comprising the component A, the component B to the at least one window pane or the framing structure;
iii) joining the at least one window pane and the framing structure by means of the applied adhesive system;
iv) at least partially curing the applied adhesive system comprising the component A and the component B;
v) filling gap(s) between the at least partially cured adhesive system and the frame structure and/or between the at least partially cured adhesive system and a neighbouring, second window pane with component A.

2. Process according to claim 1 wherein the catalyst used in component B is selective towards polyol-isocyanate reactions, preferably the catalyst in component B is a tertiary amine.

3. Process according to any of the previous claims, wherein the ration of component A to component B is 10 to 0.5, preferably 10 to 1.2.

4. Process according to any of the previous claims wherein the mixing of component A and component B occurs by static or dynamic mixing.

5. Process according to any of the previous claims wherein the polyol is short chained. And has a functioniality of 2-4 with a molecular weight of 60-120 g/mol, preferably a functionality of 3 and a molecular weight of 92 g/mol.

6. Process according to any of the previous claims, wherein component A comprises (in weight-%):
- 40-60% polyurethane pre-polymer;
- 15-25% plasticizer;
- 0.1-1% amine catalyst;
- 0.05-0,01 metal catalyst;
- 20-40% filler particles.

7. Process according to any of the previous claims, wherein component B comprises (in weight-%):
- 35-55% polyol, preferably a tri-functional polyol;
- 0.1-1% catalyst;
- 40-60% thickening agent, preferably hydrophobic thickening agent;
and other additives, such as plasticizers.

8. Process according to any of the previous claims, wherein an accelerator is used in step v) together with component A, preferably a water based paste.

9. Use of a reactive system, comprising a component A and a component B, wherein
▪ component A comprises a polyurethane pre-polymer, and
▪ component B comprises an amine or a polyol, preferably a polyol,
for a process according to any of the previous claims.

10. Vehicle comprising at least one window pane joined to a framing structure by a process according to any of the previous claims.

## Patentansprüche

1. Verfahren zum Einbau einer Fensterscheibe in eine Rahmenstruktur, insbesondere eine Rahmenstruktur in einem Fahrzeug, aufweisend die Schritte
i) Bereitstellen eines Klebstoffsystems, das eine Komponente A und eine Komponente B umfasst, wobei
▪ die Komponente A ein Polyurethan-Prepolymer umfasst, und
▪ Komponente B ein Amin oder ein Polyol, vorzugsweise ein Polyol, umfasst;
ii) Aufbringen eines Klebesystems, das die Komponente A und die Komponente B umfasst, auf die wenigsntes eine Fensterscheibe oder Rahmenkonstruktion;
iii) Verbinden der mindestens einen Fensterscheibe und Rahmenkonstruktion mit Hilfe des aufgebrachten Klebesystems;
iv) zumindest teilweises Aushärten des aufgetragenen Klebstoffsystems, bestehend aus der Komponente A und der Komponente B;
v) Füllen von Spalt(en) zwischen dem zumindest teilweise ausgehärteten Klebstoffsystem und der Rahmenstruktur und/oder zwischen dem zumindest teilweise ausgehärteten Klebstoffsystem und einer benachbarten, zweiten Fensterscheibe mit Komponente A.

2. Verfahren nach Anspruch 1, wobei der in Komponente B verwendete Katalysator selektiv gegenüber Polyol-Isocyanat-Reaktionen ist, vorzugsweise ist der Katalysator in Komponente B ein tertiäres Amin.

3. Verfahren nach einem der vorhergehenden Ansprüche, wobei das Verhältnis von Komponente A zu Komponente B 10 bis 0.5, vorzugsweise 10 bis 1.2, beträgt.

4. Verfahren nach einem der vorhergehenden Ansprüche, wobei das Mischen von Komponente A und Komponente B durch statisches oder dynamisches Mischen erfolgt.

5. Verfahren nach einem der vorhergehenden Ansprüche, wobei das Polyol kurzkettig ist. Und eine Funktionalität von 2-4 mit einem Molekulargewicht von 60-120 g/mol aufweist, vorzugsweise eine Funktionalität von 3 und ein Molekulargewicht von 92 g/mol aufweist.

6. Verfahren nach einem der vorhergehenden Ansprüche, wobei Komponente A umfasst (in Gew.-%):
- 40-60% Polyurethan-Prepolymer;
- 15-25% Weichmacher;
- 0.1-1% Amin-Katalysator;
- 0.05-0.01 Metallkatalysator;
- 20-40% Füllstoffpartikel.

7. Verfahren nach einem der vorhergehenden Ansprüche, wobei Komponente B umfasst (in Gew.-%):
- 35-55% Polyol, vorzugsweise ein trifunktionelles Polyol;
- 0.1-1% Katalysator;
- 40-60% Verdickungsmittel, vorzugsweise hydrophobes Verdickungsmittel;
und andere Zusatzstoffe, wie z. B. Weichmacher.

8. Verfahren nach einem der vorhergehenden Ansprüche, wobei in Schritt v) zusammen mit Komponente A ein Beschleuniger, vorzugsweise eine Paste auf Wasserbasis, verwendet wird.

9. Verwendung eines reaktiven Systems, umfassend eine Komponente A und eine Komponente B, wobei
▪ die Komponente A ein Polyurethan-Prepolymer umfasst, und
▪ Komponente B umfasst ein Amin oder ein Polyol, vorzugsweise ein Polyol,
für ein Verfahren nach einem der vorhergehenden Ansprüche.

10. Fahrzeug mit mindestens einer Fensterscheibe, die durch ein Verfahren nach einem der vorhergehenden Ansprüche mit einer Rahmenkonstruktion verbunden ist.

## Revendications

1. Procédé d'installation d'une vitre de fenêtre dans une structure de cadre, en particulier une structure de cadre dans un véhicule, comprenant les étapes suivantes
i) fournir un système adhésif comprenant un composant A et un composant B, dans lequel
▪ le composant A comprend un prépolymère de polyuréthane, et
▪ le composant B comprend une amine ou un polyol, de préférence un polyol ;
ii) appliquer un système adhésif comprenant un composant A et un composant B sur la au moins une vitre de fenêtre ou la structure du cadre ;
iii) coller la au moins une vitre de fenêtre et la structure du cadre en utilisant le système adhésif appliqué;
iv) durcisser au moins partiellement le système adhésif appliqué, composé du composant A et du composant B ;
v) remplir le ou les espaces entre le système adhésif au moins partiellement durci et la structure du cadre et/ou entre le système adhésif au moins partiellement durci et une deuxième vitre adjacente avec le composant A.

2. Procédé de la revendication 1, dans lequel le catalyseur utilisé dans le composant B est sélectif vis-à-vis des réactions de l'isocyanate de polyol, de préférence le catalyseur dans le composant B est une amine tertiaire.

3. Procédé selon l'une quelconque des revendications précédentes, dans lequel le rapport du composant A au composant B est de 10 à 0.5, de préférence de 10 à 1.2.

4. Procédé selon l'une quelconque des revendications précédentes, dans lequel le mélange du composant A et du composant B est réalisé par mélange statique ou dynamique.

5. Procédé selon l'une quelconque des revendications précédentes, dans lequel le polyol est à chaîne courte. Et ayant une fonctionnalité de 2-4 avec un poids moléculaire de 60-120 g/mol, de préférence une fonctionnalité de 3 et un poids moléculaire de 92 g/mol.

6. Procédé de l'une quelconque des revendications précédentes, dans lequel le composant A comprend (% en poids):
- 40-60% de prépolymère de polyuréthane ;
- 15-25% plastifiant;
- 0.1-1% catalyseur aminé ;
- 0.05-0.01 catalyseur métallique ;
- 20-40% particules de remplissage.

7. Procédé de l'une quelconque des revendications précédentes, dans lequel le composant B comprend (% en poids) :
- 35-55% polyol, de préférence un polyol trifonctionnel;
- 0.1-1% catalyseur ;
- 40-60% agent épaississant, de préférence agent épaississant hydrophobe;
et d'autres additifs, tels que des plastifiants.

8. Procédé selon l'une quelconque des revendications précédentes, dans lequel, à l'étape v), un accélérateur, de préférence une pâte à base d'eau, est utilisé conjointement avec le composant A.

9. Utilisation d'un système réactif comprenant un composant A et un composant B, dans laquelle
▪ le composant A comprend un prépolymère de polyuréthane, et
▪ Le composant B comprend une amine ou un polyol, de préférence un polyol,
pour un procédé selon l'une quelconque des revendications précédentes.

10. Véhicule comportant au moins une vitre reliée à une structure de cadre par un procédé selon l'une quelconque des revendications précédentes.
